# EUROPEAN PATENT SPECIFICATION

(11) **EP 1 361 191 B1**
(45) Date of publication and mention of the grant of the patent: **07.03.2007**
(21) Application number: 03445054.4
(22) Date of filing: 08.05.2003
(51) Int. Cl.: B67D 5/04, B67D 5/08

(54) **Method and device for volume meter diagnostics**
Verfahren und Vorrichtung zur Diagnose des Volumenzählers
Méthode et dispositif de contrôle d'un compteur volumétrique

(30) Priority: 08.05.2002 SE 0201429
(43) Date of publication of application: 12.11.2003
(73) Proprietor: Dresser Wayne Aktiebolag, 200 61 Malmö (SE)
(72) Inventor: Larsson, Bengt I., 274 53 Skivarp (SE); Bergqvist, Anders, 211 48 Malmö (SE)
(74) Representative: Jörgensson, Leif Sixten

(56) References cited:
- EP-A- 0 315 738
- US-A- 6 092 410

## Description

### Technical Field

The present invention relates to a method and a device for volume meter diagnostics. More specifically, the present invention relates to a method, a computer program product, a device and a fuel delivery unit for monitoring a performance of a volume meter for a fuel delivery unit.

### Technical Background

Fuel delivery units, such as fuel pumps or fuel dispensers, for delivering fuel at e.g. fuel stations generally have a volume meter for metering the amount of fuel dispensed. The fuel may be any fluid fuel, such as gas (petrol), kerosene, oil (diesel oil, colza oil etc.), ethanol or other types of fluid fuels.

A volume meter is a device for metering an amount of delivered fluid, while the fluid flows in a conduit. Such volume meters may measure the flow rate, which is integrated over time in order to provide a volume measurement, or they may measure the volume directly.

The volume meter may comprise a revolution counter, often having a movable element, such as a piston, an impeller or a gearwheel, which is caused to move or rotate as a function of the flow rate of the fuel flow. The movable element may be connected, e.g. via an axis, to a signal generating element, which may comprise a sensor element that generates a signal as the movable element moves. The signal generating element may comprise any known device for generating detectable signals, or pulses, in response to the movement of the movable element. The signals may be converted into electrical signals, summed up and presented on a display, as e.g. a basis for payment. A pulse generating device may be based on e.g. Hall elements, optical elements, electromagnetic elements or mechanical elements. Other revolution counting elements that are capable of producing an electrical pulse signal relative to a movement or rotation are also conceivable, even those that generate an analogue signal that needs to be digitized.

Most known volume meters have a tendency to deteriorate as a consequence of mechanical wear and sometimes aging of their sensor elements. For example, sensor based volume meters may deteriorate both as a consequence of mechanical wear of its moving parts and as a consequence of aging of its sensor elements, e.g. Hall elements. A Hall element comprises a permanent magnet, which under adverse conditions may be wholly or partially demagnetized.

Most volume meters, as they age and become worn, have a tendency to measure smaller volumes than actually delivered. As a result, the party purchasing fuel may get more fuel than he or she pays for.

In order to compensate for wear and aging, the volume meter needs to be calibrated at certain intervals. Calibration is traditionally a manual operation, which generally comprises passing a well defined amount of fluid through the volume meter and adjusting, or compensating, the volume meter so as to provide a reading that corresponds to the well defined volume. Hence, calibration typically involves a substantial amount of manual work, which in some instances may be hazardous.

There are different ways of adjusting or compensating the volume meter in response to the calibration. SE 460 929 discloses two known methods for adjusting the volume meter.

According to the first method, the rotating element is mechanically adjusted so as to cause a certain amount of rotation to correspond to a certain volume. However, this method requires manual operation, which may be time consuming and which may require the operator to work under adverse and sometimes hazardous conditions. Furthermore, the design of a mechanically adjustable volume meter has a tendency to become complex and bulky.

According to the second method, the detection of the pulses is divided into a plurality of short time intervals. A correction factor is determined for each time interval, and all detected pulses in that time interval are corrected by multiplying each of the detected pulses with the correction factor. The correction factor may be composed of a plurality of subfactors, such as the flow rate of the fluid, the temperature of the fluid and a factor representing the aging of the volume meter. The latter of the subfactors may be determined as a function of the total accumulated amount of fuel delivered by the fuel delivery unit. One or more correction factors or subfactors may be stored in a memory associated with the fuel volume meter.

Whereas different volume meters have different aging and wear characteristics, this second method does not take the actual wear and aging of each volume meter into consideration. Nor does it take random incidents into consideration, such as damage to e.g. Hall elements due to e.g. external magnetic fields or partial demagnetization.

Furthermore, this type of correction, based on statistics of the volume meter's aging, is in some countries not considered reliable enough for use, thus being excluded from regulatory approval. Hence, manual calibration is still necessary.

EP-0 315 738 A2 discloses an automatic meter proving and calibration method and system according to the preamble of claims 1 and 15 respectively, and aimed at eliminating the need for manual calibration of fluid volume meters in fuel pumps. However, this type of automated systems are complex, costly and not approved in all countries.

US 6,092,410 discloses a manual meter calibration method, whereby a meter error is applied directly to a processor in the fuel pump to generate a corrected pulse stream not containing the meter error.

Thus, there is a need for a method and a device for providing reliable statistical data as a basis for determining service requirements and for enabling accurate automatic calibration and/or compensation of a volume meter in a fuel delivery unit, thus reducing the need for manual calibration of the volume meter.

### Summary of the Invention

Hence, it is an object of the present invention to provide a method and a device, which wholly or partially overcome the drawbacks of prior art methods and devices.

This object is achieved by a method according to independent claim 1, a computer program product according to independent claim 14, a device according to independent claim 15 and a fuel delivery unit according to independent claim 23. Embodiments of the invention are set forth in the enclosed dependent claims and in the following description.

Thus, according to a first aspect of the invention, there is provided a method for monitoring a performance of a volume meter for a fuel delivery unit according to claim 1.

Monitoring a performance of a volume meter is the process of following, manually or automatically, one or more parameters that are indicative of the development, such as aging or wear, of the volume meter. The monitoring may comprise reading, continuously, at predetermined intervals or in response to predefined events, the stored values. The read values may be processed and compared to predetermined or calculated values or relationships.

A fuel delivery unit may be a fuel pump, a fuel dispenser or any equivalent thereof, which is known to the person skilled in the art.

A data memory is any machine readable memory in which data may be stored and accessed.

A calibration result is any piece of data that indicates a relationship between an actual, well defined volume and a volume measured by the volume meter. The calibration result may take the form of e.g. a number of pulses from the volume meter which corresponds to the test volume. The calibration result may also be a derived value, such as an index, a ratio or a compensation factor that may be used to compensate for inaccuracies in the volume meter.

An aging indicator is any piece of data that is indicative of the aging or wear of the volume meter. The aging indicators may be processed by e.g. a control unit prior to being stored in the memory. Such aging indicators may be e.g. the total (accumulated) amount of fuel delivered throughout the life of the fuel delivery unit or the volume meter, the number of error pulses received, number of error conditions, number of fuelling operations, number of meter starts/stops, the time since the fuel delivery unit was installed or the time since some predetermined event, such as calibration, took place.

Associated means that there is a relationship between each aging indicator data point and a calibration result data point, such that each aging indicator data point corresponds to one calibration result data point. Each calibration result data point may, however, correspond to data points of more than one type of aging indicators.

The method provides the opportunity to follow the aging or wear of the meter over at least a part of its life, since data series for aging indicators and calibration results are saved. These data series may be used for more accurately determining or predicting the service requirements of the volume meter, since they not only provide the actual values of the aging indicators and therewith associated calibration results, but also an indication of the derivative values, i.e. the aging rate, at different times in the life of the volume meter.

The fact that a series of actual calibration results is stored for the individual volume meter provides an opportunity to statistically estimate the aging and wear of the volume meter as a function of one or more aging indicators, which in turn may be used as a basis for compensating the volume meter for inaccuracies due to aging or for predicting future service requirements and wear.

The method further comprises the step of providing an event indication based on the calibration results and the aging indicators. For example, the event indication may be an indication of a service requirement or a calibration requirement. Alternatively, the event indication may trigger an automatic calibration procedure. A service requirement may be any requirement for maintenance, repair or calibration.

An event indication may be any indication generated in response to an extraordinary state having occurred in the volume meter. Such extraordinary states include, but are not limited to, service requirements. The event indication may be provided to a user via a user interface, or it may cause the volume meter or its surrounding components to perform predefined actions, such as automatic calibration or generating an alarm.

The event indication may be generated in response to an immediate need for service, or a prediction of a future need for service. Thus, the event indication may comprise a time frame within which the service should be performed.

According to the method, inaccuracies in the volume meter may be compensated for based on the monitoring. This compensation may decrease losses due to the volume meter showing a smaller volume than that actually delivered.

According to a second aspect of the invention, there is provided a computer program product comprising instructions for controlling a fuel delivery unit. The instructions, when executed, carries out the method described above.

The computer program product may be used for implementing the invention in fuel delivery units having a programmable control unit, e.g. one that is based on a microprocessor. The computer program product may comprise e.g. a storage medium such as a diskette, a flash memory, a hard drive, a CD-ROM etc. However, the computer program product may also be conveyed to the control unit via a computer network, such as the Internet.

According to a third aspect of the invention, there is provided a device for monitoring a performance of a volume meter for a fuel delivery unit according to claim 15.

The device constitutes a way of implementing the method. Thus the device provides advantages corresponding to those of the method.

According to a fourth aspect of the invention, there is provided a fuel delivery unit comprising a volume meter for metering the amount of fuel delivered. The volume meter has a data memory associated therewith. The fuel delivery unit comprises a device such as described above.

The device may be wholly or partially integrated with the fuel delivery unit. For example, it may be comprised in the fuel delivery unit's control unit, or it may be wholly or partially arranged at a physically separated location, such as at a location simultaneously serving a plurality of fuel delivery units or even at a location serving a plurality of fuel delivery sites, such as a plurality of fuel stations.

### Brief Description of the Drawings

The invention will be described in more detail with reference to the appended schematic drawings, which show examples of embodiments of the invention.

Fig 1 is a schematic diagram of a device according to an embodiment of the invention.

Fig 2 is a schematic flow chart of a method according to an embodiment of the invention.

Figs 3a and 3b show a table that illustrates the contents of the data memory of fig 1.

Fig 4 schematically illustrates a fuel delivery unit according to an aspect of the invention.

### Description of Embodiments of the Invention

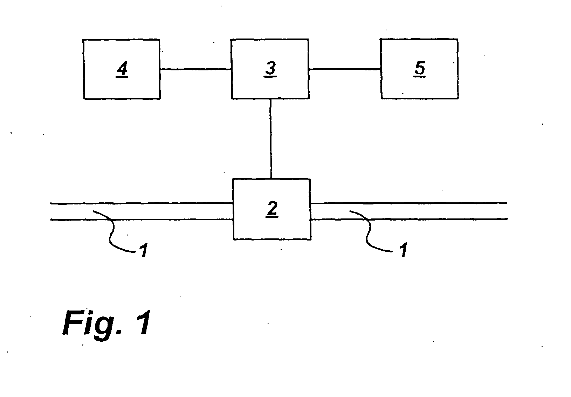

Referring to fig 1, which is a schematic diagram of a device according to an aspect of the invention, a fuel conduit 1 in a fuel delivery unit (not shown) is provided with a fuel volume meter 2. The fuel volume meter may be any known displacement metering device that is capable of providing a signal output, such as an electronic signal.

According to an embodiment of the invention, the volume meter 2 is of a type which generates a train of digital electronic pulses or flanks in response to fuel being passed through the volume meter. Alternatively, the volume meter may comprise a counter (not shown), which may be read out by any communication means, e.g. via a serial port. Specifically, the volume meter 2 may be of a type that generates a predetermined number of pulses in response to a predetermined volume of fuel being passed through it.

The volume meter 2 may be susceptible to provide invalid or error conditions, e.g. when at certain rotary positions or when subjected to external influence, such as e.g. an external magnetic field. Other types and reasons of error conditions are conceivable.

The device according to the invention may further comprise a user interface 4. The user interface may comprise a control panel (not shown) that may be integrated with the fuel delivery unit or volume meter 2, but it may also comprise a connector (not shown) to which a detachable control panel may be connected. The user interface 4 may comprise an input device (not shown), such as a keypad/keyboard and an output device (not shown), such as a display. The user interface 4 may be arranged for setting different modes of the device, such as a calibration mode, a diagnostics mode etc.

The device further comprises a data memory 5 for storing data relating to and/or originating from the volume meter 2. The memory 5 may be any type of known volatile or non-volatile memory having sufficient space for storing the desired data. The memory may be composed of one or more memory elements, possibly separated and arranged at different physical locations.

The device may also comprise a control unit 3. The control unit may have functionality for controlling the interaction between the volume meter 2, the user interface 4 and the memory 5. For example, the control unit 3 may receive a signal from the volume meter 2, transform it into a desirable format and provide that to the memory 5 and/or to the user interface 4. The control unit 3 may also communicate with other devices within the fuel delivery uniting unit (not shown) as well as with external devices (not shown). For example, the control unit 3 may communicate with payment equipment (not shown) for receiving payment from customers, valves (not shown) for controlling fuel flow in the fuel conduit 1, centralized control or monitoring equipment etc.

The control unit 3 may be integrated with the volume meter 2, the memory 5 and/or the user interface 4. The control unit 3 may comprise components that are specific for the purpose, or, it may be a general processing unit provided with software for providing the herein described functionality.

The control unit 3 may further be arranged to continuously monitor the operation of the fuel delivery unit. For example, it may monitor predetermined error conditions or error conditions from e.g. the volume meter 2. The control unit 3 may also have functionality to process signals received from the volume meter 2, in order to compensate for inaccuracies.

The different parts (2, 3, 4, 5) of the device do not necessarily have to be arranged in each others physical vicinity, but may be arranged in different locations. For example, the control unit 3, the user interface 4 and the memory 5 may be arranged at a distance from the fuel delivery unit, either at the fuel delivery uniting site, serving multiple fuel delivery units, or even at a central location, serving multiple fuel delivery sites. The parts may be interconnected by means of any communication system.

According to one alternative, the fuel delivery unit may be provided with a mechanism for wholly or partially automatic calibration of the volume meter 2. In one embodiment, this may be done by passing a well defined volume of fuel through the volume meter 2, while recording the measured volume in order to provide a calibration result as described above.

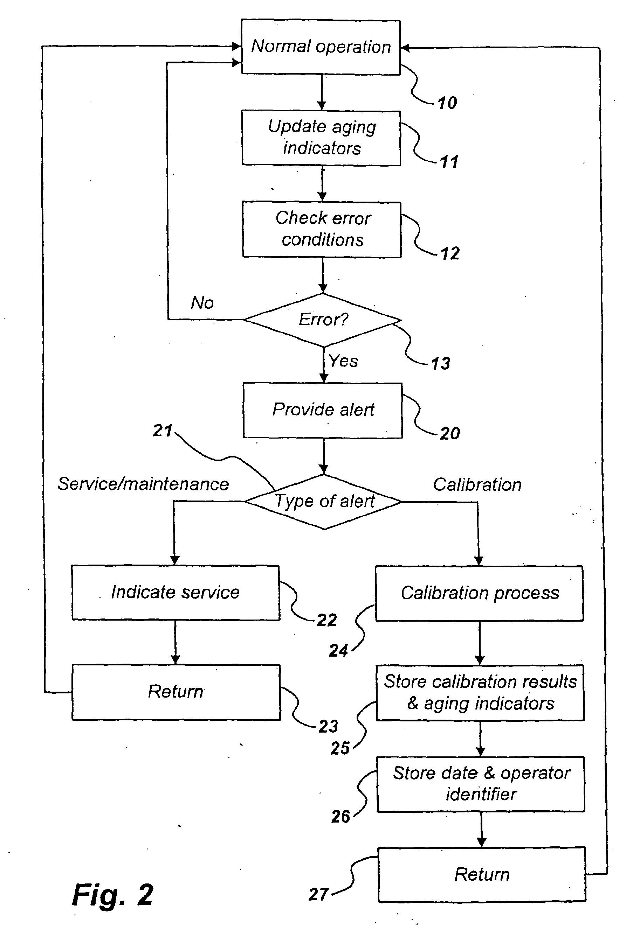

Fig 2 is a schematic flow chart of a method according to an embodiment of the invention.

Step 10 represents normal operation of the fuel delivery uniting unit, i.e. functions such as receiving payment, controlling fuelling operations etc.

At step 11, aging indicators may be collected from e.g. the volume meter 2 and written to the memory 5.

Aging indicators may be collected and stored or updated in the data memory 5 continuously during operation of the fuel delivery unit. The aging indicators may be stored either as series of separate data points. Alternatively, each aging indicator may be summed up or otherwise merged to form an accumulated value.

In step 12 error conditions are checked. This may be done by e.g. reading aging indicators from the memory 5, but other sensors or interrupts may also be verified to determine whether an error condition is at hand. For example, an error condition may be detected when an aging indicator has reached a certain limit value. More specifically, an aging indicator such as a wear indicator, e.g. total volume delivered, may be compared to a limit value, such that an error condition is detected when the total volume delivered reaches a predetermined value.

In step 13, it is decided whether an error condition is at hand. In the embodiment using Hall elements, error conditions may be generated as a consequence of aging or manipulation of the magnetic discs. If no error condition is at hand, the operation returns to normal, i.e. to step 10. If there is an error condition, the operation proceeds to step 20, where an alert or event indication is provided. In step 21, the type of alert is determined. If the alert is e.g. a maintenance or repair alert, then the appropriate indication is given in step 22 via e.g. the user interface 4. In step 23, the operation returns to normal, after the maintenance or repair has been completed.

In step 24, calibration of the volume meter 2 is performed. The calibration procedure may be any known calibration procedure, such as one comprising passing a well defined volume of fuel or any other test fluid through the volume meter 2, thus obtaining a measurement which is representative of that well defined volume. The data from the calibration procedure is a calibration result.

Alternatively, the calibration procedure may be performed automatically, e.g. by a device such as the one described above. Naturally, automatic and manual calibration may be combined by e.g. manual calibration of the automatic calibration equipment or by alternating between manual calibration and automatic calibration at certain intervals.

In step 25, the calibration result is stored in the memory 5 together with an aging indicator. At the time of calibration, the aging indicator is read from the memory 5 and associated with the calibration result that is to be stored. The association may be achieved by e.g. storing the calibration result and the aging indicator such that an association is created, e.g. a table, a database or the like. Other known forms of achieving the association are conceivable.

The calibration result may be automatically transferred to the memory 5 via e.g. the control unit 3, as a part of e.g. steps 24 or 25. Alternatively, the calibration result may be read off manually and then input to the memory via e.g. the user interface 4. The calibration result may be processed into a desirable format, either manually or automatically prior to being stored in the memory 5.

It is also conceivable to associate a plurality of aging indicators with the calibration result. For example, one aging indicator indicating the total amount of fuel delivered, and one aging indicator indicating a number of error conditions such as errors, may be associated with each calibration result.

In step 26, additional data is stored and associated with the calibration result. Examples of such data may be the date of calibration or an identifier of the operator responsible for the calibration.

In step 27, the operation returns to normal after storing of calibration results and aging indicators has been completed.

According to the preferred embodiment of the invention, step 10 comprises reading calibration results and/or aging indicators from the memory 5 and utilizing these for continuously compensating for the aging of the volume meter 2. Such compensation may take the form of an extrapolation that, based on prior calibration results, aging indicators and an algorithm or function, predicts the aging process of the volume meter 2 and compensates for that. The compensation may e.g. be based on one or more aging indicators.

The volume meter compensation described above may also include other variables for which the volume meter reading needs to be adjusted. As described above, such other variables include, but is not limited to, temperature and flow rate.

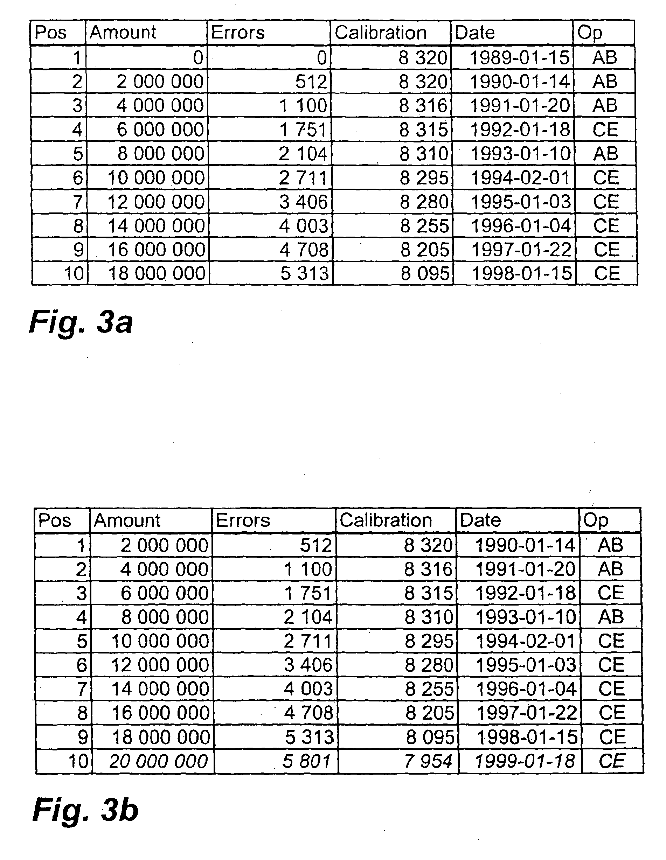

Figs 3a and 3b are tables of contents of the data memory 5 of fig 1. Fig 3a shows the contents of the memory 5 after the 10 first calibrations. Fig 3b shows the contents of the memory 5 after another, eleventh, calibration has been performed. Thus, in the table of fig 3b, the oldest data point has been discarded and a new one, representing the last calibration has been added.

According to this embodiment of the invention, the memory has been arranged for storing a series of 10 calibration results. Each row in the table comprises six variables: table index 31, total amount of fuel delivered 32, total number of errors detected 33, calibration result 34, date of calibration 35 and operator signature 36. It is evident that other combinations of variables may be chosen.

In the example of figs 3a and 3b, the data is presented as a table, but other forms of representation or storage are conceivable. Whereas, in the tables of figs 3a and 3b, the variables representing aging indicators are stored as absolute values, it is realized that other formats may be chosen. It is also realized that other, smaller or larger table sizes may be chosen. For example, a larger table may be needed if the calibration frequency is high, and a large number of calibration results as a basis for compensation is needed.

According to one embodiment, the table may be arranged as a first-in-first-out table of a fixed number of positions, such that when the table is full, addition of a new value removes the oldest value in the table.

The memory 5 may also be arranged to, separately from the tables of figs 3a and 3b, store a chosen set of variables, such as aging indicators, that are continuously updated during normal operation and only transferred to e.g. the tables of figs 3a and 3b when calibration is performed. Alternatively, the last row of the table may contain such continuously updated variables. In that case, the row may be completed and "sealed" upon the addition of the calibration result, and a new row being assigned to contain the continuously updated variables.

The invention may be implemented as a computer program product, which e.g. may be executed in the control unit 3. As stated above, the control unit 3 may be arranged wholly or partially outside the fuel delivery unit, such as e.g. in a central location.

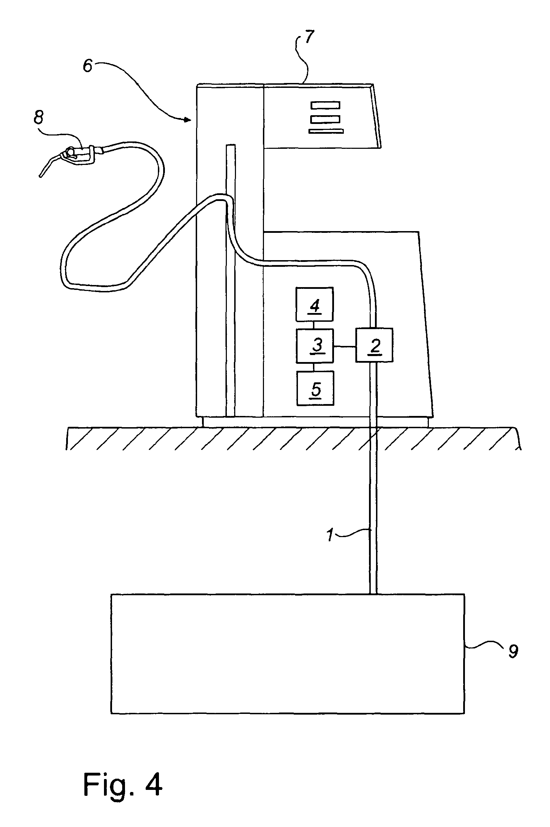

Fig 4 schematically illustrates a fuel delivery unit 6, such as a fuel pump or a fuel dispenser. The fuel delivery unit has a housing 7, a nozzle 8 for delivering fuel and it may be connected to a fuel container, such as a tank 9, which may be arranged above or below ground. Fig 4 illustrates the volume meter 2 that is arranged to meter the flow in the fuel conduit 1. The volume meter is connected to a control unit 3, which in turn is connected to a memory 5 and a user interface 4, as described above.

While the invention above has been described mainly with regard to a volume meter having a Hall element that generates electronic pulses or flanks, it is realized that the present invention is applicable to any displacement type flow rate meter, and especially those that are able to provide a signal which may be represented in or converted to a digital form.

## Claims

1. A method for monitoring a performance of a volume meter (2) for a fuel delivery unity (6), said volume meter having a data memory (5) associated therewith, **characterized by**
storing, in said memory, a series of values of a calibration result for said volume meter;
storing, in said memory, a series of values of an aging indicator for said volume meter, each of said values of said aging indicator being associated with a respective value of said calibration result;
monitoring said performance based on said series of values of said calibration result and said series of values of said aging indicator; and
providing an event indication based on said monitoring,
wherein said monitoring comprises:
reading said stored values from said memory,
processing said read values, and
comparing the processed values to predetermined or calculated values or relationships.

2. The method as claimed in claim 1, **characterized in that** said event indication is an indication of a service requirement.

3. The method as claimed in claim 1 or 2, **characterized in that** said event indication triggers an automatic calibration procedure.

4. The method as claimed in claim 1, **characterized in that** inaccuracies in said volume meter are compensated for based on said monitoring.

5. The method as claimed in any one of the preceding claims, **characterized in that** storing a series of values of calibration results comprises storing a value that is indicative of a measurement of a predetermined volume of fuel.

6. The method as claimed in any one of the preceding claims, **characterized in that** the storing, in said memory, of a series of values of an aging indicator comprises storing a series of values of an indicator indicating the wear of the volume meter.

7. The method as claimed in any one of the preceding claims, **characterized in that** storing a series of values of aging indicators comprises storing a value that is indicative of a total amount of fuel delivered through the fuel volume meter.

8. The method as claimed in any one of the preceding claims, **characterized in that** storing a series of values of said aging indicator comprises storing a value that is indicative of a number of detected errors.

9. The method as claimed in any one of the preceding claims, **characterized by** storing a date indicator which is associated with one of said values of said calibration result.

10. The method as claimed in any one of the preceding claims, **characterized by** storing an operator identifier.

11. The method as claimed in any one of the preceding claims, **characterized in that** said monitoring is based on a predetermined number of values of said calibration result and therewith associated values of said aging indicator.

12. The method as claimed in 11, **characterized in that** said predetermined number of values of said calibration result and therewith associated values of said aging indicator form a list having a fixed number of positions, and that as a new calibration result and therewith associated aging indicator value are stored in the list, a previously stored calibration result and therewith associated aging indicator value are removed from the list.

13. The method as claimed in any one of the preceding claims, **characterized in that** said monitoring comprises updating said values of said calibration result and said values of said aging indicator in connection with the volume meter being calibrated.

14. A computer program product comprising instructions for controlling a fuel delivery unit, **characterized in that** said instructions, when executed, carries out the method of any one of claims 1-13.

15. Device for monitoring a performance of a volume meter (2) for a fuel delivery unit (6), said volume meter (2) having a data memory (5) associated therewith, **characterized by**
means for storing a series of values of a calibration result for said volume meter;
means for storing a series of values of an aging indicator for said volume meter, each of said values of said aging indicator being associated with a respective value of said calibration result;
means for monitoring said performance based on said series of values of said calibration result and said series of values of said aging indicator; and
means for providing an event indication based on an output from said means for monitoring,
wherein said monitoring means is arranged to:
read said stored values from said memory,
process said read values, and
compare the processed values to predetermined or calculated values or relationships.

16. The device as claimed in claim 15, **characterized in that** said event indication is an indication of a service requirement

17. The device as claimed in claim 15 or 16, **characterized in that** said event indication is a trigger for an automatic calibration procedure.

18. The device as claimed in claim 15, **characterized by** means for compensating for inaccuracies in said volume meter, based on an output from said means for monitoring.

19. The device as claimed in any one of the claims 15-18, **characterized in that** said memory is arranged for storing a predetermined number of values of said calibration result and therewith associated values of said aging indicator.

20. The device as claimed in claim 19, **characterized in that** said predetermined number of values of said calibration result and therewith associated values of said aging indicator form a list having a fixed number of positions, and that as a new values of said calibration result and therewith associated values of said aging indicator are stored in the list, a previously stored value of said calibration result and therewith associated value of said aging indicator are removed from the list.

21. The device as claimed in claim 20, **characterized in that** said list is a first-in-first-out data structure.

22. The device as claimed in any one of claims 15-21, **characterized in that** said device is arranged to update said series of values of said calibration result and said series of values of said aging indicator in connection with the volume meter being calibrated.

23. A fuel delivery unit (6) comprising a volume meter (2) for metering the amount of fuel delivered, said volume meter (2) having a data memory (5) associated therewith, **characterized in that** it comprises a device according to any one of claims 15-22.

## Patentansprüche

1. Verfahren zur Überwachung der Funktion eines Volumenmessers (2) für eine Kraftstofffördereinheit (6), wobei der Volumenmesser einen mit diesem verbundenen Datenspeicher (5) umfasst,
**dadurch gekennzeichnet, dass** im Datenspeicher eine Folge von Werten von Kalibrierungsergebnissen für den Volumenmesser gespeichert wird;
dass eine Folge von Werten von Alterungsgrößen des Volumenmessers im Speicher gespeichert werden, wobei jeder der Werte der Alterungsgrößen mit einem entsprechenden Wert des Kalibrierungsergebnisses in Verbindung gebracht wird;
dass eine Überwachung der Funktion erfolgt, welche auf der Serie der Werte des Kalibrierungsergebnisses und der Serie von Werten der Alterungsgröße basiert; und wobei eine Ereignisanzeige, basierend auf der Überwachung, bereitgestellt wird,
wobei die Überwachung folgendes umfasst:
- Auslesen der gespeicherten Werte aus dem Speicher,
- Verarbeitung der ausgelesenen Werte, und
- Vergleich der verarbeiteten Werte mit vorbestimmten oder berechneten Werten oder - Verhältnissen.

2. Verfahren nach Anspruch 1,
**dadurch gekennzeichnet, dass** die Ereignisanzeige eine Anzeige des Erfordernisses einer Wartung umfasst.

3. Verfahren nach Anspruch 1 oder 2,
**dadurch gekennzeichnet, dass** die Ereignisanzeige einen automatischen Kalibrierungsprozess auslöst.

4. Verfahren nach Anspruch 1,
**dadurch gekennzeichnet, dass** Ungenauigkeiten im Volumenmesser auf Basis der Überwachung kompensiert werden.

5. Verfahren gemäß einem der vorgenannten Ansprüche,
**dadurch gekennzeichnet, dass** die Speicherung einer Reihe von Werten der Kalibrierungsergebnisse die Speicherung eines Wertes umfasst, welche eine Messung eines vorherbestimmten Volumens an Kraftstoff kennzeichnet.

6. Verfahren nach einem der vorgenannten Ansprüche,
**dadurch gekennzeichnet, dass** die Speicherung im Speicher einer Reihe von Werten von Alterungsgrößen mit der Speicherung einer Reihe von Werten von Größen aufweist, welche den Vergleich des Volumenmesser kennzeichnen.

7. Verfahren nach einem der vorgenannten Ansprüche,
**dadurch gekennzeichnet, dass** die Speicherung der Reihen von Werten der Alterungsgröße eine Speicherung eines Wertes umfasst, welches kennzeichnend für den absoluten Betrag des geförderten Kraftstoffes durch den Kraftstoffvolumenmesser ist.

8. Verfahren nach einem der vorgenannten Ansprüche,
**dadurch gekennzeichnet, dass** die Speicherung einer Reihe von Werten der Alterungsgrößen die Speicherung eines Wertes umfasst, welcher für die Anzahl der erkannten Fehler kennzeichnend ist.

9. Verfahren nach einem der vorgenannten Ansprüche,
**dadurch gekennzeichnet, dass** eine Speicherung erfolgt, die eine Datumsanzeige abspeichert, welche mit einem der genannten Werte des Kalibrierungsergebnisses in Verbindung steht.

10. Verfahren nach einem der vorgenannten Ansprüche,
**dadurch gekennzeichnet, dass** eine Speicherung der Identifikation des Bedieners erfolgt.

11. Verfahren nach einem der vorgenannten Ansprüche,
**dadurch gekennzeichnet, dass** die Überwachung auf einer vorbestimmten Anzahl von Werten der Kalibrierungsergebnisse basiert, und damit mit Werten der Alterungsgrößen verbunden ist.

12. Verfahren nach Anspruch 11,
**dadurch gekennzeichnet, dass** die vorbestimmte Anzahl an Werten der Kalibrierungsergebnisse und damit verbundene Werte der Alterungsgrößen eine Liste bilden, welche eine feste Anzahl von Positionen umfasst, und dass dann, wenn ein neues Kalibrierungsergebnis und eine damit verknüpfte Alterungsgröße in der Liste gespeichert wird, ein zuvor gespeichertes Kalibrierungsergebnis und die damit verbundenen Alterungsgrößen aus der Liste entfernt werden.

13. Verfahren gemäß einem der vorgenannten Ansprüche,
**dadurch gekennzeichnet, dass** die Überwachung eine Aktualisierung der Werte der Kalibrierungsergebnisse und der Werte der Alterungsgrößen in Verbindung mit dem Volumenmesser umfasst, welcher kalibriert werden.

14. Computerprogrammprodukt mit Ausführungen zur Kontrolle einer Kraftstofffördereinheit,
**dadurch gekennzeichnet, dass** die Ausführungen dann, wenn diese erfolgen, das Verfahren gemäß einem der Ansprüche 1-13 ausführen.

15. Vorrichtung zur Überwachung der Funktion eines Volumenmessers (2) für eine Kraftstofffördereinheit (6), wobei der Volumenmesser (2) einen mit diesem verbundenen Datenspeicher (5) umfasst,
**dadurch gekennzeichnet, dass** Mittel zur Speicherung einer Reihe von Werten der Kalibrierungsergebnisse für den Volumenmesser vorgesehen sind;
dass Mittel zur Speicherung einer Reihe von Werten von Alterungsgrößen für den Volumenmesser vorgesehen sind, wobei jeder Wert der Alterungsgröße mit einem entsprechenden Wert des Kalibrierungsergebnisses in Verbindung gebracht ist;
dass Mittel zur Überwachung der Funktion, welche auf einer Reihe von Werten der Kalibrierungsergebnisse und einer Reihe von Werten der Alterungsgrößen basiert, vorgesehen sind; und
wobei zur Bereitstellung einer Ereignisanzeige, basierend aus dem Ausgang des Mittels zur Überwachung, Überwachungsmittel vorgesehen sind, um:
- die Werte aus dem Speicher auszulesen,
- die Werte zu bearbeiten, und
- die bearbeiteten Werte mit vorbestimmten Werten oder Verhältnissen zu vergleichen.

16. Vorrichtung gemäß Anspruch 15,
**dadurch gekennzeichnet, dass** die Ereignisanzeige eine Anzeige des Erfordernisses einer Wartung umfasst.

17. Vorrichtung nach einem der Ansprüche 15 oder 16,
**dadurch gekennzeichnet, dass** die Ereignisanzeige einen automatischen Vorgang einer Kalibrierung auslöst.

18. Vorrichtung nach Anspruch 15,
**dadurch gekennzeichnet, dass** die Mittel zur Kompensation der Ungenauigkeiten des Volumenmessers vorgesehen sind, welche auf einer Ausgabe der Mittel zur Überwachung basieren.

19. Vorrichtung nach einem der Ansprüche 15-18,
**dadurch gekennzeichnet, dass** der Speicher zur Speicherung einer vorbestimmten Anzahl von Werten der Kalibrierungsergebnisse und der damit in Verbindung gebrachten Werte der Alterungsgrößen ausgebildet ist.

20. Vorrichtung nach Anspruch 19,
**dadurch gekennzeichnet, dass** die vorbestimmte Anzahl von Werten der Kalibrierungsergebnisse und der damit verbundenen Werte der Alterungsgrößen eine Liste bildet, welche eine feste Anzahl von Positionen aufweist, und dass ein neuer Wert eines Kalibrierungsergebnisses und der damit verbundenen Werte der Alterungsgrößen in der Liste gespeichert werden, und ein zuvor gespeicherter Wert der Kalibrierungsergebnisse und der damit in Verbindung gebrachten Werte der Alterungsgrößen aus der Liste entfernt wird.

21. Vorrichtung nach Anspruch 20,
**dadurch gekennzeichnet, dass** die Liste eine First-In-First-Out-Datenstruktur aufweist.

22. Vorrichtung nach einem der Ansprüche 15-21,
**dadurch gekennzeichnet, dass** die Vorrichtung zur Aktualisierung der Reihe von Werten von Kalibrierungsergebnissen und der Reihe von Werten von Alterungsgrößen in Verbindung mit dem Volumenmesser, der kalibriert wird, ausgebildet ist.

23. Kraftstofffördereinheit (6) mit einem Volumenmesser (2) zur Messung des Betrages des geförderten Kraftstoffs, wobei der Volumenmesser (2) einen mit diesem verbundenen Datenspeicher (5) umfasst,
**dadurch gekennzeichnet, dass** diese eine Vorrichtung gemäß einem der Ansprüche 15-22 umfasst.

## Revendications

1. Procédé de contrôle d'une performance d'un compteur volumétrique (2) pour une unité de distribution de carburant (6), ledit compteur volumétrique ayant une mémoire de données (5) associée à celui-ci, **caractérisé en ce qu'**il comprend les étapes suivantes :
stocker, dans ladite mémoire, une série de valeurs d'un résultat de calibrage pour ledit compteur volumétrique ;
stocker, dans ladite mémoire, une série de valeurs d'un indicateur de vieillissement pour ledit compteur volumétrique, chacune desdites valeurs dudit indicateur de vieillissement étant associée à une valeur respective dudit résultat de calibrage ;
contrôler ladite performance à partir desdites séries de valeurs dudit résultat de calibrage et desdites séries de valeurs dudit indicateur de vieillissement ; et
fournir une indication d'événement basée sur ledit contrôle,
dans lequel ledit contrôle comprend :
la lecture desdites valeurs stockées depuis ladite mémoire,
le traitement desdites valeurs lues, et
la comparaison des valeurs traitées à des valeurs ou à des rapports prédéterminés ou calculés.

2. Procédé selon la revendication 1, **caractérisé en ce que** ladite indication d'événement est une indication d'exigence d'entretien.

3. Procédé selon la revendication 1 ou 2, **caractérisé en ce que** ladite indication d'événement déclenche un procédé de calibrage automatique.

4. Procédé selon la revendication 1, **caractérisé en ce que** des imprécisions dans ledit compteur volumétrique sont compensées sur la base dudit contrôle.

5. Procédé selon l'une quelconque des revendications précédentes, **caractérisé en ce que** le stockage d'une série de valeurs de résultats de calibrage comprend le stockage d'une valeur qui est indicative d'une mesure d'une quantité prédéterminée de carburant.

6. Procédé selon l'une quelconque des revendications précédentes, **caractérisé en ce que** le stockage, dans ladite mémoire, d'une série de valeurs d'un indicateur de vieillissement comprend le stockage d'une série de valeurs d'un indicateur indiquant l'usure du compteur volumétrique.

7. Procédé selon l'une quelconque des revendications précédentes, **caractérisé en ce que** le stockage d'une série de valeurs d'indicateurs de vieillissement comprend le stockage d'une valeur indiquant une quantité totale de carburant distribué à travers le compteur volumétrique.

8. Procédé selon l'une quelconque des revendications précédentes, **caractérisé en ce que** le stockage d'une série de valeurs dudit indicateur de vieillissement comprend le stockage d'une valeur indiquant un nombre d'erreurs détectées.

9. Procédé selon l'une quelconque des revendications précédentes, **caractérisé en ce qu'**il comprend l'étape consistant à stocker un indicateur de date qui est associé à une desdites valeurs dudit résultat de calibrage.

10. Procédé selon l'une quelconque des revendications précédentes, **caractérisé en ce qu'**il comprend l'étape consistant à stocker un identifiant d'opérateur.

11. Procédé selon l'une quelconque des revendications précédentes, **caractérisé en ce que** ledit contrôle est basé sur un nombre prédéterminé de valeurs dudit résultat de calibrage et de valeurs dudit indicateur de vieillissement associées à celles-ci.

12. Procédé selon la revendication 11, **caractérisé en ce que** ledit nombre prédéterminé de valeurs dudit résultat de calibrage et de valeurs dudit indicateur de vieillissement associées à celles-ci, forment une liste ayant un nombre fixe de positions, et **en ce que** lorsqu'un nouveau résultat de calibrage et une valeur d'indicateur de vieillissement associée à celui-ci sont stockés dans la liste un résultat de calibrage stocké précédemment ainsi que la valeur d'indicateur de vieillissement associée à celui-ci sont retirés de la liste.

13. Procédé selon l'une quelconque des revendications précédentes, **caractérisé en ce que** ledit contrôle comprend la mise à jour desdites valeurs dudit résultat de calibrage et desdites valeurs dudit indicateur de vieillissement en corrélation avec le calibrage dudit compteur volumétrique.

14. Produit de programme informatique, comprenant des instructions de contrôle d'une unité de distribution de carburant, **caractérisé en ce que** lesdites instructions, lorsqu'elles sont exécutées, exécutent le procédé selon une quelconque des revendications 1 à 13.

15. Dispositif de contrôle d'une performance d'un compteur volumétrique (2) pour une unité de distribution de carburant (6), ledit compteur volumétrique (2) ayant une mémoire de données (5) associée à celui-ci, **caractérisé en ce qu'**il comprend
des moyens destinés à stocker une série de valeurs d'un résultat de calibrage pour ledit compteur volumétrique ;
des moyens destinés à stocker une série de valeurs d'un indicateur de vieillissement pour ledit compteur volumétrique, chacune desdites valeurs dudit indicateur de vieillissement étant associée à une valeur respective de ladite unité de calibrage ;
des moyens destinés à contrôler ladite performance sur la base de ladite série de valeurs dudit résultat de calibrage et de ladite série de valeurs dudit indicateur de vieillissement ; et
des moyens destinés à fournir une indication d'événement basée sur une sortie provenant desdits moyens de contrôle,
dans lequel lesdits moyens de contrôle sont agencés pour :
lire lesdites valeurs stockées depuis ladite mémoire,
traiter lesdites valeurs lues, et
comparer les valeurs traitées à des valeurs ou rapports calculés ou prédéterminés.

16. Dispositif selon la revendication 15, **caractérisé en ce qu'**une indication d'événement est une indication d'exigence d'entretien.

17. Dispositif selon la revendication 15 ou 16, **caractérisé en ce que** ladite indication d'événement déclenche un procédé de calibrage automatique.

18. Dispositif selon la revendication 15, **caractérisé en ce qu'**il comporte des moyens destinés à compenser lesdites imprécisions dans ledit compteur volumétrique, sur la base d'une sortie provenant desdits moyens de contrôle.

19. Dispositif selon l'une quelconque des revendications 15 à 18, **caractérisé en ce que** ladite mémoire est agencée de manière à stocker un nombre prédéterminé de valeurs dudit résultat de calibrage et de valeurs dudit indicateur de vieillissement associées à celles-ci.

20. Dispositif selon la revendication 19, **caractérisé en ce que** ledit nombre prédéterminé de valeurs dudit résultat de calibrage et de valeurs dudit indicateur de vieillissement associées à celles-ci, forme une liste ayant un nombre fixe de positions, et **en ce que** lorsqu'une nouvelle valeur dudit résultat de calibrage et une valeur dudit indicateur de vieillissement associée à celle-ci, sont stockées dans la liste, une valeur précédemment stockée dudit résultat de calibrage et une valeur dudit indicateur de vieillissement associée à celle-ci, sont retirées de la liste.

21. Dispositif selon la revendication 20, **caractérisé en ce que** ladite liste est une structure de données du type premier entré, premier sorti.

22. Dispositif selon l'une quelconque des revendications 15 à 21, **caractérisé en ce que** ledit dispositif est agencé de manière à mettre à jour ladite série de valeurs dudit résultat de calibrage et ladite série de valeurs dudit indicateur de vieillissement en corrélation avec le calibrage du compteur volumétrique.

23. Unité de distribution de carburant (6) comprenant un compteur volumétrique (2), pour mesurer la quantité de carburant distribuée, ledit compteur volumétrique (2) ayant une mémoire de données (5) associée à celui-ci, **caractérisée en ce qu'**elle comprend un dispositif selon l'une quelconque des revendications 15 à 22.
